# EUROPEAN PATENT APPLICATION

(11) **EP 2 875 720 A1**
(43) Date of publication of application: **27.05.2015**
(21) Application number: 13890154.1
(22) Date of filing: 23.07.2013
(51) Int. Cl.: A01G 9/02, A01G 31/00

(54) **VERTICAL HANGING UNIT IN THE FORM OF BAGS FOR THE HYDROPONIC CULTIVATION OF PLANTS, AND A PANEL OF VERTICAL HANGING UNITS IN THE FORM OF BAGS FOR HYDROPONIC CULTIVATION**

(30) Priority: 23.07.2012 MX 2012008531
(71) Applicant: Martinez Ruanova, Luis Héctor Alberto, 14208 Delegación Tlalpan Distrito Federal (MX)
(72) Inventor: Martinez Ruanova, Luis Héctor Alberto, 14208 Delegación Tlalpan Distrito Federal (MX)
(74) Representative: Temino Ceniceros, Ignacio
(86) International application number: PCT/MX2013/000093
(87) International publication number: WO 2015/012675

(57) **Abstract**

This invention relates to a modular configuration unit vertical shaped pendant bags of geotextile felt for hydroponic cultivation of plants 6 vegetation, which comprises a vertical panel with a plurality of pendant units in way geotextile felt bags for hydroponics cultivation and its construction process. The object of this invention is to provide a totally different type of vertical panel to those currently on the market, thanks to an innovative internal construction, whose main feature is that it combines the advantages of several of the vertical panels existing on the market, but with a smaller number of components and more benefits.

## Description

### FIELD OF THE INVENTION

The present invention relates generally to the hydroponic cultivation of plants, vegetables, etc. vertically and more particularly as pendant and better aesthetics.

### BACKGROUND OF THE INVENTION

Usually a pot hanging in a vertical side wall of a bracket with three straps, a ring and a hook is used. Today hydroponics systems ornamental plants and vegetables are performed in horizontal or inclined manner on trays, tubes or channels in which different culture media are established. One of these crops is hydroponics which is a method of growing plants using: inert media such as perlite, gravel, mineral wool, coir, coconut shells, where these plants are planted, and mineral nutrient solutions dissolved in water with no soil, the advantages are that water consumption is reduced because it is recycled and the amount and type of nutrients that growth and high fruit production is controlled and the disease control pests and pathogens found in the soil.

The utility model CN201781807 mentions a panel with two fabrics, non-woven and other absorbent cotton with a waterproof film; these films have several rows with grooves forming the bags where the plants are and these are sprayed by means of water pipes. However, this system does not include a single geotextile felt waterproof on one side, nor has bags hanging units that can be installed or uninstalled, for maintenance, change or remove plants from a single row without affecting the rest of the plants in other rows of vertical hanging unit also has no irrigation system and water recovery and form no structural strength is impossible to place a panel on top of another.

The patent GB2454678 teaches a panel hanging with a minimum of two rows and multiple cells juxtaposed shaped pockets between the two rows, where the plants are. The panel is formed with two main panels shaped: one plastic sheet and a secondary flexible plastic sheet and undulating shaped and perforations forming the bags and which are connected to the same panels and plants are sprayed by means of pipes. However, this system does not include a single geotextile felt waterproof on one side, nor has bags hanging units single file that can be installed or uninstalled, for maintenance, change or remove plants from a single row without affecting other plants in other rows of vertical hanging unit, also has no water recovery system and form no structural strength, so, is impossible to place a panel on top of another.

The patent US20120005958A1 mentions a hanging panel plastic tube with several rows forming pockets where plants are and it is attached in different parts, has several holes and plants are sprayed with water piped. However, this system does not include a single geotextile felt waterproof on one side, nor has bags hanging units single file that can be installed or uninstalled, for maintenance, change or remove plants from a single row without affecting other plants in other rows of vertical hanging unit also has no irrigation system and water recovery and form no structural strength is impossible to place a panel on top of another.

Patent FR2902966 mentions the hanging a panel with at least two rows with multiple juxtaposed cells as pockets between the two rows where the plants are, the panel is formed with a shaped wall and a layer of geotextile where they join the cells or pockets of geotextile sheet glued or baked wall panel and each cell has a horizontal wall inside the cells. However, this system does not include a single geotextile felt waterproof on one side, nor has bags hanging units single file that can be installed or uninstalled, for maintenance, change or remove plants from a single row without affecting other plants in other rows of vertical hanging unit also lacks piping system for irrigation and water recovery and form no structural strength is impossible to place a panel on top of another.

Patent US 20120066972 mentions a vertical hanging panel with a plurality of rows and pockets shaped grooves where the plants are, the panel is formed with a nonwoven geotextile within a n-shaped frame with a lower tank and cap rollers. However, this system does not include a single geotextile felt waterproof on one side, nor has bags hanging units single file that can be installed or uninstalled, for maintenance, change or remove plants from a single row without affecting the rest of the plants of other lines of the vertical pendant unit and form no structural strength is impossible to place a panel above another.

Generally the solution given in the prior art is through an integrated system with a large number of rows that have bags of plants vertical panel, these panels are rigid or flexible so its provision does not remove or change with a single row without affecting other bags which represents a major drawback.

### OBJETIVS OF THE INVENTION

The object of this invention relates to a modular structure for a vertical ensemble pendant in bags shape, for hydroponic cultivation of plants or vegetation, comprising a vertical panel with a plurality of vertical suspension units as felted geotextile bags, and their construction process.

A first objective is to increase the number of plants in a lower horizontal surface, placing a plurality of vertical pendant units as geotextile felt bags for growing vertically within the vertical panel.

A second objective is being able to install or uninstall a unity or plurality of vertical hanging units as geotextile bags Felt vertical panel.

A third objective is to change or remove plants from a single row of bags without affecting the rest of the plants in other rows of vertical panel.

A fourth object is to provide water through a pipe from the top of the vertical panel, the draining by gravity and capillary continuously through each vertical suspension unit into bags geotextile felt, which are overlapping each other and containing plants.

A fifth objective is to place the vertical panel with a plurality of vertical suspension units as felted geotextile bags on a wall without moisture to cause said wall by water draining irrigation product.

A sixth objective is to collect the excess irrigation water through a water collecting channel in the bottom of the vertical panel, to be recycled by means of a hydraulic pump and thus reducing water consumption.

To achieve the above objects, the present invention provides:
Vertical pendant shaped unit felt geotextile bags for hydroponic cultivation of plants or vegetation. Comprising a loader bar located within a horizontal upper hem that gives rise to a curtain of geotextile capillary wick and high water retention impermeable coating on one side, the other side contains a row with a plurality of pockets formed by means of a horizontal hem at the bottom of said curtain with a plurality of equidistant vertical seams each which causes an opening in the top shaping the bags which contain substrates where the plants are placed or vegetation.

Vertical panel which is formed by two vertical poles with a plurality of folds to provide structural load resistance shaped angle profile in containing a plurality of vertical suspension units as bags geotextile felt, placed horizontally in different levels, equidistant and overlapping each other. Two tensioning belts diagonally placed and fixed to the vertical posts to prevent deformation of the panel. A piping network in inverted L-shape with a plurality of perforations as emitters in the section of horizontal piping by which it will drain by gravity and capillary water nutrient solution dissolved through the bags with inert substrate containing the plant roots. Channel to reach the lower water collection where the hydraulic pump is located, the channel is fixed at its ends to vertical poles.

### DESCRIPTION OF THE DRAWINGS

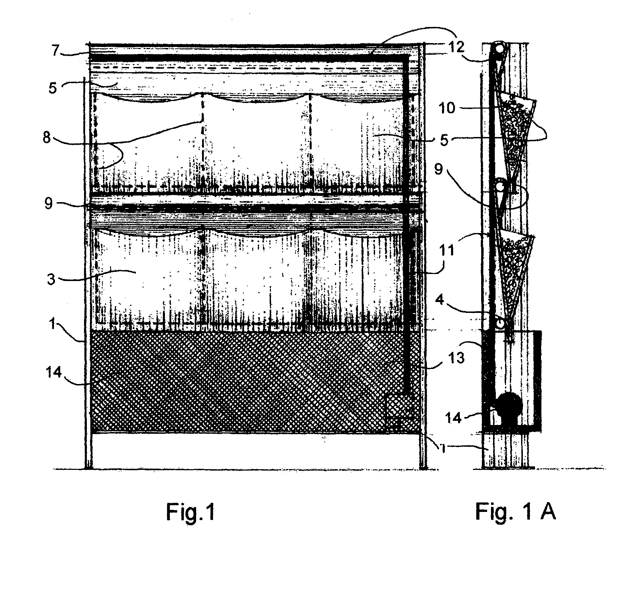

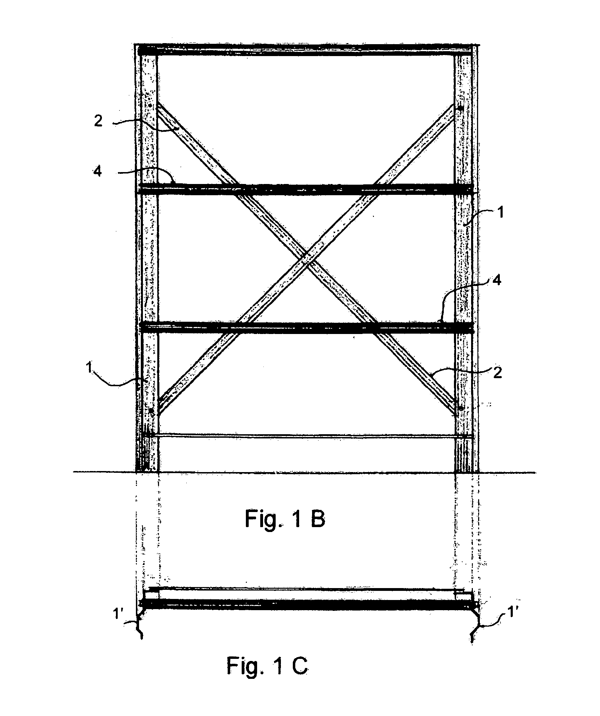

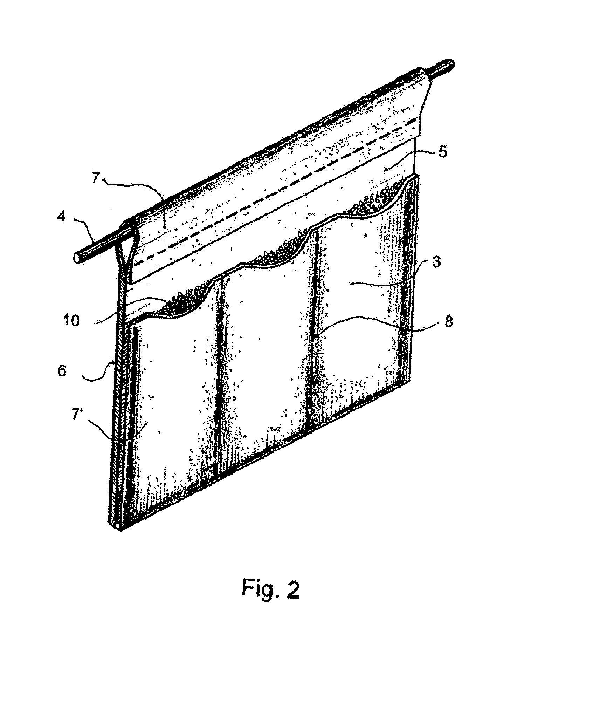

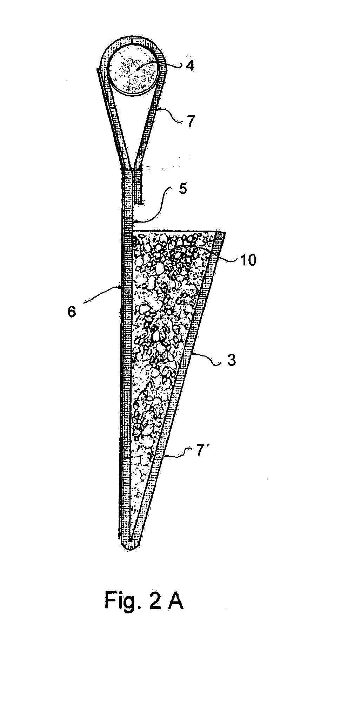

To complement the description being made and in order to aid a better understanding of the features of the invention is attached as an integral part of said description a set of drawings where in an illustrative and non-limiting and using the same signs reference to indicate the parts and figures shown is represented as follows:
Referring to Figure 1, a front elevation view, showing the vertical panel, vertical pendant units as felted geotextile bags, with bars and modular system of prior art irrigation.
Referring to Figure 1A. A cross-sectional view showing the vertical panel vertical pendant units as felted geotextile bags, with bars and modular system of prior art irrigation.
Referring to Figure 1B, a front elevation view showing the modular structure of the vertical panel of the prior art.
Referring to Figure 1C, A plan view, of the front elevation, showing the structure of the modular vertical panel with the plurality of folds in the prior art pole.
Referring to Fig 2, A perspective view of the vertical pendant shaped unit geotextile felt bags for hydroponic cultivation of plants showing the prior art.
Referring to Figure 2 A: A cross-sectional view of the vertical pendant shaped unit felt geotextile bags showing the loader bar and the curtain of the prior art.

The following reference numbers are used to indicate the parts and environment of the invention on the drawings:
1. Vertical Pole.
1' Vertical pole with a plurality of folds
2. Tape tensioner.
3. Bags
4. Loader bar
5. Vertical hanging units as geotextile felt bags
6. Waterproof coating
7. Horizontal hem top
7'. Horizontal bottom hem
8. Sewing
9. Overlap
10. Inert substrates
11. Vertical pipe
12. Horizontal pipe with a plurality of holes equidistant each other.
13. Canal water collection
14. Hydraulic pump

### DETAILED DESCRIPTION OF THE INVENTION

The present invention relates at least one modular structure. The modular structure comprises a vertical pendant bags unit for plants or vegetation hydroponic cultivation with at least one vertical panel with a plurality of vertical pendant bags units as geotextile felt bags for hydroponic cultivation, and its assembly process.

FIG 1 schematically shows a vertical pendant bags unit comprising two vertical posts (1) with a plurality of folds to provide angle profile freight structural strength, two tightening straps diagonal positioned and fixed to the vertical posts to prevent panel deformation, two posts (1) with a plurality of vertical pendant bags units forming geotextile felt bags for plants or vegetation hydroponic cultivation. Vertical pendant bags units can be installed or uninstalled by the bars (4) through screws to said posts (1), said vertical pendant bags units manufactured by geotextile felt with waterproof coating, a L-inverted pipe comprising a vertical (11) and horizontal (12) pipe with equidistant perforations as droppers, whereby drain by gravity and capillary nutrient solution dissolved water through vertical pendant bags units forming geotextile felt bags overlapping (9) each other with inert substrates (10) containing roots of plants, a water harvest duct (13) to collect excess water irrigation and to reduce water consumption, and a hydraulic pump (14) located inside or outside the water harvest duct (13) to recycle excess irrigation water collected from excess water irrigation.

FIG 1B and 1C shows a vertical pendant bags unit comprising two vertical posts (1) with a plurality of folds (1') to provide angle profile freight structural strength, two tightening straps (2) diagonal positioned and fixed to the vertical posts (1) to prevent panel deformation.

FIGS 2 and 2A show a vertical pendant bags unit forming geotextile felt bags, comprising a freight bar (4) inside a horizontal upper fold to provide a high capillarity geotextile felt whereby drain by gravity and capillary nutrient solution dissolved water with waterproof coating (6) on one side, other side with a row containing a plurality of bags (3) formed by a horizontal bottom fold (7') of said curtain with a plurality of vertical equidistant seams (8) between each other causing an opening on top whereby forming bags which contain inert substrates (10) where plants or vegetation are placed.

The assembly process of a vertical pendant bags unit for plants or vegetation hydroponic cultivation, as well as modular structure for plants hydroponic cultivation and vertical pendant bags units forming geotextile felt bags, may be manufactured in appropriate dimensions modules for one person can manipulate and can build in different materials such as: aluminum, brass, copper, steel, iron, nickel, chromium, tin, tungsten or alloys of these metals, thermosets, thermoplastic and reinforced plastics, natural solid, veneer and bonded wood, natural or plastic textile fibers, elastomer or asphalt waterproofing of any texture and color.

Efficiency in said assembly process of a vertical pendant bags unit for plants or vegetation hydroponic cultivation requires less ground surface to provide a higher density of cultivation plants per m2. A higher height of pane increases the density of the plants.

The design of a vertical pendant bags unit forming geotextile felt bags for plants or vegetation hydroponic cultivation and the assembly process of the vertical modular structure for plants hydroponic cultivation and their role contain the novelty of the system resulting in:
Maximum use of space because it can be grown at different levels.
   - Let remove and replace a vertical pendant bags unit forming geotextile felt bags for plants hydroponic cultivation without affecting the other vertical pendant bags units forming geotextile felt bags of vertical modular structure.
   - System can easily be automated
   - Allows plant, harvest and rotate crops faster.
   - Requires less water for irrigation.
   - Facilitates cleaning, harvest and irrigation system.
   - Reduces carbon emission.

Other features of this vertical modular structure for plants hydroponic cultivation:
It requires no walls where the panels are supported when more than two panels are placed, being positions as back, sides, at right angles, parallel or above them, since the vertical posts of said panels used to form the structure wall or garden.
   - It is 100% buildable, portable, removable and recoverable.

For the above described can say that the features of this vertical modular structure and vertical pendant bags unit forming geotextile felt bags for plants or vegetation hydroponic cultivation is not found in the state of the art, by any other appliance and gather together the reduction conditions of: physical space, material costs, labor costs, installation time, carbon emissions, to increase the density and the production of organic agriculture and greater quality control.

The preferred embodiment of this invention, FIGS 2 and 2A show a vertical pendant bags unit forming geotextile felt bags, comprising a freight bar (4) inside a horizontal upper fold to provide a high capillarity geotextile felt whereby drain by gravity and capillary nutrient solution dissolved water with waterproof coating (6) on one side, other side with a row containing a plurality of bags (3) formed by a horizontal bottom fold of said curtain with a plurality of vertical equidistant seams between each other causing an opening on top whereby forming bags which contain inert substrates (10) where plants or vegetation are placed.

The preferred embodiment of this invention, a vertical pendant bags unit forming geotextile felt bags for plants hydroponic cultivation, also could put individually or with a plurality of vertical pendant bags units forming geotextile felt bags, through brakets to the wall, FIG not shown.

Another preferred embodiment of this invention, a vertical pendant bags unit forming geotextile felt bags for plants hydroponic cultivation, also may be placed individually or with a plurality of vertical pendant bags units forming geotextile felt bags, through suspenders to a horizontal surface, FIG not shown.

Another preferred embodiment of this invention, a vertical pendant bags unit forming geotextile felt bags for plants hydroponic cultivation, also may be placed individually or with a plurality of vertical pendant bags units forming geotextile felt bags, through parallel bars between two walls, FIG not shown.

Another preferred embodiment of this invention, a vertical pendant bags unit forming geotextile felt bags for plants hydroponic cultivation, comprising:
- A horizontal pendant bar located inside horizontal fold at the top of pendant unit.
- At the top of pendant unit is located a horizontal fold for the freight bar, at the bottom is located a horizontal fold as curtain with a row with a plurality of bags formed by vertical equidistant seams between each other causing an opening on top whereby forming bags.
- A waterproof coating on the back to avoid waste of water, in front side with a row containing a plurality of bags without waterproof coating to avoid waste of water.

Another preferred embodiment of this invention, FIG 1A, 1B and 1C schematically shows a vertical pendant bags unit comprising two vertical posts with a plurality of folds to provide angle profile freight structural strength, with a plurality of vertical pendant bags units forming geotextile felt bags for plants or vegetation hydroponic cultivation, collocated at different levels, equidistant and overlapping each other. Two tightening straps diagonal positioned and fixed to the vertical posts to prevent panel deformation. A L-inverted pipe comprising a vertical (11) and horizontal pipe with equidistant perforations as droppers, whereby drain by gravity and capillary nutrient solution dissolved water through vertical pendant bags units forming geotextile felt bags overlapping each other with inert substrates containing roots of plants, a water harvest duct to collect excess water irrigation and to reduce water consumption, and a hydraulic pump located inside or outside the water harvest duct to recycle excess irrigation water collected from excess water irrigation to reach the lower channel of water collector which is fixed at its ends to the uprights and the water harvest duct accumulates and rises the hydraulic pump through the riser pipe to horizontal drilling with equidistant droppers, wherein the irrigation cycle is closed.

In another preferred embodiment of this invention, vertical panel structure can be installed or uninstalled a plurality of vertical pendant bags units forming geotextile felt bags with without affecting other installed rows.

In another preferred embodiment of this invention, vertical panel structure can be installed or uninstalled a plurality of vertical panel structure joined at their posts laterally linearly which gives the possibility to connect horizontal pipe in a linear as well as the water collector channel is connected linearly causing the use of only one vertical pipe and one hydraulic pump for the irrigation system.

In another preferred embodiment of this invention, vertical panel structure can be installed or uninstalled a plurality of vertical panel structure joined longitudinally at their posts linearly top of each other giving the possibility to connect the vertical pipe linearly causing the use of only one vertical pipe and one water collector channel and one hydraulic pump for the irrigation system.

In another preferred embodiment of this invention, two vertical posts with a plurality of folds to provide angle profile freight structural strength with a plurality of vertical pendant bags units forming geotextile felt bags for hydroponic cultivation collocated at different levels horizontally, equidistant and overlapping each other. Two tightening straps diagonal positioned and fixed to the vertical posts to prevent panel deformation. A L-inverted pipe with a plurality of perforations as droppers in horizontal pipe located on top of said panel whereby drain by gravity and capillary nutrient solution dissolved water through vertical pendant bags units forming geotextile felt bags overlapping each other with inert substrates containing roots of plants, said water irrigation does not get humidity on back of the bags because high capillarity and water retention geotextile felt has waterproof coating on one side.

In another preferred embodiment of this invention, vertical panel structure for plants hydroponic cultivation could be placed mixing two or more panel without relying on any wall or vertical member that support said panels as due to the way it is built poles give support and structural strength required to be stable in combination of two panels at least arranged in a squad.

In another preferred embodiment of this invention, vertical panel structure for plants hydroponic cultivation could be placed a plurality of panels without relying on any wall or vertical element that support such panels such placement in different positions generate gardens or greenhouses resulting in greater control and resource efficiency in hydroponic cultivation.

In another preferred embodiment of this invention, vertical panel structure for plants hydroponic cultivation, due to its construction process is easily transportable, buildable, mountable, removable, collapsible and reusable 100% without triggering any waste as well as the composition of their materials that are fully recyclable supporting the environment and reducing carbon emissions.

In another preferred embodiment of this invention, vertical panel structure for plants hydroponic cultivation comprises:
a) A support structure formed by two vertical support posts having a plurality of folds; two tightening straps attached to the vertical posts and holes for fixing the horizontal bars to the location of hanging units are fixed to the vertical posts.
b) Vertical pendant units in the form of bags of geotextile felt, standing on the horizontal bars that are attached to the vertical posts which can be installed or uninstalled easily ranks.
c) a L-inverted pipe, a water harvest duct and a hydraulic pump.

## Claims

1. A panel of vertical hanging units in way of bags for hydroponic plants **characterized by** comprising:
a) A support structure formed by two vertical support posts having a plurality of folds; two diagonal tensioning straps attached to the vertical posts and holes for fixing the horizontal bars to the location of hanging units fixing to the vertical posts.
b) Vertical hanging units in way bags of geotextile felt, that is standing on the horizontal bars that are attached to the vertical posts which can be installed or uninstalled easily for ranks.
c) A pipe network inverted L-shaped a water collection channel and a hydraulic pump.

2. A panel of vertical hanging units according to claim 1 characterized because the vertical hanging units are formed by:
i. A hanging horizontal bar is placed within horizontal hem the top of the pendant unit;
ii. At the top has a horizontal hem for the loader bar at the bottom has a hem Horizontal curtain having a row with a plurality of bags formed with a plurality of equidistant vertical seams providing entity if an opening in the part above which shape the bags;
iii. A waterproof coating on the back so it does not drain the water, at the front in which the bags does not have the waterproof coating which allows water to flow.

3. A panel of vertical hanging units according to claim 1, characterized because the piping inverted L-shaped is constituted by a vertical pipe and a horizontal pipe with perforations equidistant to each other as droppers.

4. A panel of vertical hanging units according to claim 1, characterized because the vertical panel can be placed with a plurality of side panels joined at their posts linearly giving possibility connecting one horizontal pipe with equidistant perforations each linearly as the water collection channel will be connected linearly with the use of a single hydraulic pump.

5. A panel of vertical hanging units according to claim 1, characterized because the panel can be placed vertically with a plurality of panels joined at their poles vertically linearly giving possibility of connecting a single riser in a linear fashion, with the use of a single water collection channel and a single hydraulic pump.

6. A panel of vertical hanging units according to claim 1, characterized because the vertical panel may be placed in combination with a plurality of panels without relying on any wall or element vertical that support panels such as due to the way that the posts give the required structural strength and support to keep arranged in a squad is constructed.

7. A panel of vertical hanging units according to claim 1, characterized because the vertical panels because of the way they are constructed poles give support and structural strength necessary to stay positioned vertically and the placement in different positions generate gardens or greenhouses.

8. A panel of vertical hanging units according to claim 1, **characterized in that** the vertical panel is comprised of two vertical posts in metal profile that may be shaped in angle, channel, slab or "T" and a film section, solid or tubular.

9. A panel of vertical hanging units according to claim 1, wherein the vertical panel due to its construction process is easily transportable, buildable, mountable, removable, collapsible and reusable 100% and 0% waste generated and the composition of their materials that are recyclable supporting the environment and reducing emissions carbon footprint.

10. A panel of vertical hanging units according to claim 1, characterized because the hydraulic pump is located inside or outside the canal water collection.

11. Vertical pendant unit constituted by bags for hydroponic cultivation of plants, characterized because are formed by:
i. A hanging horizontal bar is placed within horizontal hem the top of the pendant unit;
ii. ii) At the top has a horizontal hem for the loader bar at the bottom has a hem Horizontal curtain having a row with a plurality of bags formed with a plurality of equidistant vertical seams providing entity if an opening in the part above which shape the bags;
iii. A waterproof coating on the back so it does not drain the water, at the front in which the bags does not have the waterproof coating which allows water to flow;
iv. said bags are formed by felt geotextile.

12. Vertical pendant unit constituted by bags for hydroponic cultivation of plants, according to claim 11, characterized because said hanging units geotextile bags felt, have a waterproof coating on the back.

13. Vertical pendant unit constituted by bags for hydroponic cultivation of plants, according to claim 11, characterized because hanging units geotextile bags felt, can be installed or uninstalled by rows.

14. Vertical pendant unit constituted by bags for hydroponic cultivation of plants, according to claim 11, characterized because the hanging units geotextile bags felt, may individually place or a plurality of them in the panel or through bracket, straps or rods to a wall 6 roof.

15. Vertical pendant unit constituted by bags for hydroponic cultivation of plants, according to claim 11, wherein the geotextile felt curtain contains a row with a plurality of cavities formed by a plurality of equidistant vertical seams between them and such junctions could be cooked, glued, stapled or riveted.
